Europäisches Patentamt

European Patent Office

Office européen des brevets

(19)

(11) Numéro de publication: **0 399 594**

**A1**

## (12) DEMANDE DE BREVET EUROPEEN

(21) Numéro de dépôt: **90201226.9**

(22) Date de dépôt: **15.05.90**

(51) Int. Cl.⁵: **B32B 27/34, B32B 23/08, B32B 31/30**

(30) Priorité: **24.05.89 FR 8906895**

(43) Date de publication de la demande:
**28.11.90 Bulletin 90/48**

(84) Etats contractants désignés:
**BE DE DK ES FR GB IT NL SE**

(71) Demandeur: **SOLVAY & Cie (Société Anonyme)**
**Rue du Prince Albert, 33**
**B-1050 Bruxelles(BE)**

(72) Inventeur: **Grobelny, Roland**
**Rue Buffon 13**
**F-39500 Tavaux(FR)**
Inventeur: **D'Heur, Jacques**
**Trassersweg 436/2**
**B-1120 Bruxelles(BE)**
Inventeur: **Michel, Claude**
**Avenue Marie de Hongrie 10**
**B-1300 Wavre(BE)**

(74) Mandataire: **Husemann, Claude et al**
**SOLVAY & CIE Département de la Propriété Industrielle 310, Rue de Ransbeek**
**B-1120 Bruxelles(BE)**

(54) **Complexe laminé.**

(57) Complexe laminé constitué d'une feuille support revêtue d'un film (A) comprenant au moins une couche à base d'un polyamide résultant de la polycondensation d'un acide $\alpha,\omega$-dicarboxylique aliphatique avec des xylylènes diamines.

EP 0 399 594 A1

## Complexe laminé

La présente invention concerne un complexe laminé constitué d'une feuille support revêtue d'un film comprenant au moins une couche d'un polyamide semi-aromatique. Elle concerne également un procédé d'obtention de ce complexe laminé.

Dans la demande de brevet japonais 84/229660 publiée sous le numéro 108549/86 (MITSUBISHI PETROCHEMICAL), on a décrit des complexes obtenus par laminage d'une feuille support, qui peut être à base de papier, avec un film multicouche fabriqué par coextrusion d'une couche de polyoléfine (polyéthylène à basse densité (PE-LD)) et d'une couche d'un polymère présentant des propriétés barrière au gaz (polymère barrière). Ce polymère barrière peut être un copolymère éthylène-acétate de vinyle hydrolysé (EVOH), un polyacrylonitrile, un polychlorure de vinylidène ou du nylon 6. L'inconvénient de ces polymères barrières réside dans leurs températures de mise en oeuvre relativement basses. Ils ne peuvent être coextrudés avec les polyoléfines, en particulier le PE-LD à des températures suffisamment élevées pour assurer l'adhérence de ces dernières à la feuille support. On sait en effet (voir par exemple F. Hensen, Plastics Extrusion Technology, Hauser Publishers, 1988, page 335) que cette adhérence est liée à la température d'extrusion de la polyoléfine. Pour remédier à cet inconvénient, il a été proposé de soumettre la couche du film destinée à être mise en contact avec la feuille support à un traitement séparé améliorant son adhérence (traitement corona...) ou à enduire cette couche avec des adhésifs coûteux (demande de brevet japonais citée; F. Hensen, op. cit., page 333-334).

Ces opérations compliquées ne se sont pas révélées tout à fait satisfaisantes. Les adhésifs, par exemple, peuvent migrer à travers les complexes ou se décomposer à température élevée avec formation de produits malodorants ou toxiques.

On a maintenant trouvé que des polymères barrières particuliers, susceptibles d'être mis en oeuvre à plus haute température, permettent d'obtenir des complexes laminés dont les constituants adhèrent bien entre eux.

La présente invention concerne à cet effet des complexes laminés constitués d'une feuille support revêtue d'un film (A) comprenant au moins une couche à base d'un polyamide (P) résultant de la polycondensation d'un acide $\alpha,\omega$-dicarboxylique aliphatique avec des xylylènes diamines.

Le complexe laminé selon l'invention comprend une feuille support. La feuille support peut être à base de matières organiques et de métaux. Parmi les métaux, l'aluminium est préféré. Les matières organiques peuvent être des matières cellulosiques comme par exemple le papier, le carton, la cellophane ou des polymères thermoplastiques comme par exemple le polypropylène, les polyamides aliphatiques et le polyéthylène téréphtalate. Les feuilles support à base d'un polymère thermoplastique peuvent être obtenues par les méthodes classiques de mise en oeuvre des polymères thermoplastiques et utilisées telles quelles ou après biorientation desdites feuilles.

La feuille support peut être elle-même constituée d'une feuille laminée comprenant une couche à base d'un polymère thermoplastique et une couche métallique comme par exemple les feuilles en polymères thermoplastiques métallisées, par exemple par dépôt d'un métal tel que l'aluminium, ou comprenant une couche d'une matière cellulosique et au moins une couche à base d'un polymère thermoplastique comme par exemple les feuilles laminées papier/polyéthylène, polyéthylène/papier/polyéthylène.

Le complexe laminé selon l'invention comprend aussi un film (A) associé par laminage avec la feuille support. Le film (A) comprend au moins une couche à base d'un polyamide (P) résultant de la polycondensation d'un acide $\alpha,\omega$-dicarboxylique aliphatique avec des xylylènes diamines.

Les polyamides (P) à partir desquels sont fabriqués les produits de l'invention sont synthétisés de manière connue par réaction de polycondensation de xylylène diamine, contenant plus de 60 % molaires et, de préférence, plus de 90 % molaires de l'isomère méta de cette diamine (le solde éventuel étant constitué par l'isomère para), et d'un acide $\alpha,\omega$-dicarboxylique aliphatique. Cet acide est généralement un acide à chaîne linéaire, contenant de 6 à 12 atomes de carbone, que l'on peut représenter par la formule $HOOC\ (CH_2)_n\ COOH$ dans laquelle $4 \leq n \leq 10$. Des exemples d'acides utilisables sont les acides adipique, subérique, sébacique, undécanedioïque et dodécanedioïque. L'acide adipique est préféré. Le polyamide préféré dans le cadre de la présente invention est obtenu par réaction de condensation de m-xylylène diamine avec l'acide adipique (dénommé ci-après PAMXD6). Le choix de ce polyamide comme polymère barrière permet d'obtenir des films (A) à des températures de mise en oeuvre comprises entre 250 et 320°C et des complexes laminés dont les constituants adhèrent bien entre eux.

Le film (A) peut également comprendre au moins une couche (C) à base de polyoléfine modifiée. Ce matériau, coextrudable à haute température avec le polyamide (P), améliore la résistance à l'humidité de ce dernier et en évite l'absorption d'eau. De plus, il renforce l'adhérence entre la feuille support, le polyamide (P) et les éventuelles autres couches pouvant constituer le film (A) (voir plus loin). Ce renforcement de l'adhérence est donc obtenu directement et de manière plus simple qu'avec les enductions de latex adhésifs pratiquées selon l'art antérieur.

Par polyoléfine modifiée, on entend désigner les polyoléfines qui comportent en plus d'unités monomériques dérivées d'alpha-oléfines, des unités dérivées de monomères polaires. Par alpha-oléfine, on entend désigner les oléfines à insaturation terminale dont la molécule contient de 2 à 8 atomes de carbone, en particulier l'éthylène, le propylène et le n-butène, tout particulièrement l'éthylène. Le monomère polaire peut être n'importe quel composé organique comprenant au moins une liaison insaturée, de préférence de type oléfinique, et au moins un groupe carboxylique éventuellement sous forme d'anhydride. De préférence, on utilise des monomères comprenant de 3 à 12 atomes de carbone dans leur molécule. Ces monomères polaires peuvent être notamment des acides monocarboxyliques insaturés tels que les acides acrylique, méthacrylique ou chloroacrylique, ou des acides polycarboxyliques insaturés tels que les acides maléique, fumarique et itaconique, ou encore les anhydrides dérivés de ces acides tels que l'anhydride maléique. Les monomères polaires préférés sont les acides acrylique et méthacrylique et l'anhydride maléique.

Les polyoléfines modifiées peuvent être obtenues par greffage de polyoléfines au moyen d'un monomère polaire ou par copolymérisation d'alpha-oléfines avec des monomères polaires. Parmi les polyoléfines modifiées obtenues par greffage de polyoléfines au moyen d'un monomère polaire, on peut citer les polyoléfines greffées au moyen d'anhydride maléique telles que les polyéthylènes ou polypropylènes greffés d'anhydride maléique (par exemple les produits commercialisés sous la dénomination ADMER par MITSUI PETROCHEMICAL INDUSTRIES).

Parmi les copolymères d'alpha-oléfines avec des monomères polaires utilisables selon l'invention, on peut citer les copolymères de l'éthylène avec des monomères polaires tels que les copolymères éthylène-acide acrylique, les copolymères éthylène-acide méthacrylique, les copolymères éthylène-anhydride maléique, les terpolymères éthylène-acide acrylique-anhydride maléique et aussi les ionomères, c'est-à-dire des polymères contenant des liaisons ioniques entre les chaînes polymériques comme par exemple les sels métalliques (Na, Zn) des copolymères éthylène-acide (méth)acrylique. Parmi les copolymères cités ci-dessus, les ionomères et les terpolymères éthylène-acide acrylique-anhydride maléique sont préférés. Le mélange de ces polyoléfines modifiées avec des polyoléfines non modifiées de nature identique ou différente ne sort pas du cadre de l'invention.

Lorsque le film (A) comprend une couche en polyamide (P) et au moins une couche (C), l'ordre successif des couches peut être tel qu'il donne lieu à des structures : FCP, FPC et FCPC où
F représente la feuille support;
P la couche en polyamide (P);
C la(les) couche(s) (C).

Outre la couche en polyamide (P) et la(les) éventuelle(s) couche(s) (C), le film (A) peut comprendre en outre au moins une couche (D) à base d'un polymère thermoplastique dont la température de mise en oeuvre est compatible avec celle du polyamide (P) et de l'éventuelle polyoléfine modifiée de la(les) couche(s) (C). A titre de polymères thermoplastiques utilisables pour réaliser la couche (D), on peut citer les polyesters, tels que le polyéthylène téréphtalate et le polybutène téréphtalate, les polyamides aliphatiques, tels que le nylon 66, et les polyoléfines, telles que le polyéthylène et le polypropylène.

Parmi tous ces polymères thermoplastiques, les polyoléfines sont préférées. Elles sont en général de même nature que celles définies en rapport avec la couche (C). Des polyoléfines particulièrement préférées sont les polymères de l'éthylène et parmi ceux-ci le polyéthylène à basse densité (PE-LD). En effet, ces polyoléfines et le polyamide (P), en particulier le PE-LD, d'une part, et le PAMXD6, d'autre part, peuvent être tous deux coextrudés dans les plages de température élevée (250 à 300°C environ) bénéfiques à l'adhérence de la couche (D) du film (A) avec la feuille support lors de son laminage avec cette dernière.

Ces propriétés d'adhérence peuvent être encore améliorées en mélangeant la polyoléfine destinée à former la couche (D) avec 20 à 50 % en poids, de préférence 30 à 45 % en poids d'une des polyoléfines modifiées décrites en rapport avec la couche (C) ci-dessus. Parmi les polyoléfines modifiées utilisables à cet effet, on préfère les ionomères.

La couche (D) apporte une barrière supplémentaire à l'humidité et à l'absorption d'eau du film (A) et peut également, dans ses modes de réalisation préférés, apporter les caractéristiques organoleptiques demandées par l'industrie alimentaire au film (A). Les différentes structures suivantes sont possibles pour le film (A) lorsqu'il comprend une couche en polyamide (P), au moins une couche (C) et au moins une couche (D) : FDCP, FDCPC, FDCPCD, FPCD et FCPCD où
F représente la feuille support;
P la couche en polyamide (P);
C la(les) couche(s) (C);
D la(les) couche(s) (D).

La présence de plusieurs couches alternées et successives de chacun des matériaux définis plus haut entre dans le cadre de l'invention de même que la présence de couches constituées de déchets polymériques provenant du recyclage de ces matériaux.

Le film (A) peut être réalisé par n'importe quelle technique de mise en oeuvre des polymères thermoplastiques. Dans le cas où le film (A) est un film monocouche, on peut faire appel aux techniques usuelles d'extrusion à travers une filière plate. La température d'extrusion du polyamide (P) est généralement comprise entre 250 et 320°C. Dans le cas où le film (A) est un film à couches multiples, il peut être fabriqué par toute technique d'addition séquencée de diverses couches constitutives. Le mode de réalisation qui se révèle le plus avantageux sur le plan économique est la technique bien connue de coextrusion. Dans ce mode préféré de réalisation du film (A), on peut faire appel aux techniques usuelles de coextrusion à travers une filière plate ou ronde, à bloc d'alimentation ("feedblock") ou à multicanaux ("multimanifold"). Néanmoins, on donne la préférence aux films coextrudés à travers une filière a bloc d'alimentation et plus particulièrement encore à travers une filière plate à bloc d'alimentation. La température à laquelle on coextrude les polymères thermoplastiques à travers la filière varie selon les polymères thermoplastiques utilisés pour réaliser le film (A) et elle est généralement comprise entre 250 et 320°C, et de préférence entre 250 et 290°C. Pour ce mode préféré, le choix du PAMXD6 comme polyamide (P) et du PE-LD comme polyoléfine pour la couche (D) est particulièrement avantageux parce qu'ils permettent d'effectuer la coextrusion à une température (environ 270-290°C) suffisamment élevée pour que les propriétés d'adhérence soient optimales et suffisamment basse pour ne pas provoquer une dégradation intempestive de la couche (D).

L'épaisseur des couches constitutives du film (A) et l'épaisseur totale dudit film (A) n'est pas critique et dépend bien entendu de l'usage auquel on destine le complexe laminé selon l'invention. En général, on préfère toutefois, dans le cas des films (A) multicouches, que l'épaisseur de la couche en polyamide (P) soit comprise entre 2 et 200 μm et de préférence entre 5 et 50 μm, que l'épaisseur de la(des) couche(s) (C) soit comprise entre 2 et 25 μm et que l'épaisseur de la(des) couche(s) (D) soit comprise entre 2 et 50 μm. Les épaisseurs des différentes couches du film (A) sont réglées de façon telle que l'épaisseur totale du film (A) soit comprise entre 10 et 500 μm, et de préférence entre 10 et 150 μm.

Après extrusion ou coextrusion du film (A), ledit film (A) est assemblé avec la feuille support et cet assemblage du film (A) et de la feuille support constitue aussi un aspect de l'invention dans le cas où la feuille support est à base de matériau cellulosique et où le film (A) comprend au moins une couche (P) de PAMXD6 et une couche (D) de PE-LD. Selon cet aspect, la feuille support est amenée vers au moins une paire de cylindres. Dans la fente formée par la feuille support et un cylindre de la paire, on introduit le film (A) sortant d'une filière plate à une température comprise entre 270 et 290°C, c'est-à-dire, comme expliqué plus haut, dans une zone de température optimale à la fois pour l'adhérence du complexe final et pour éviter la dégradation de celui-ci. Le film (A) est réuni à la feuille support entraînée par la paire de cylindres, avec application de pression. La pression linéaire exercée dans la fente entre les cylindres et la température amenée par les cylindres sont maintenues de manière telle qu'on obtienne le maximum d'adhérence entre le film (A) et la feuille support sans déformations permanentes du film (A) ou de la feuille support et sans qu'il y ait blocage lorsque le complexe laminé est dévidé du rouleau. La pression linéaire est comprise entre 20 et 1000 N/cm et, de préférence, entre 50 et 400 N/cm. La température des cylindres est comprise entre 15 et 60°C.

Les complexes laminés selon l'invention conviennent particulièrement bien pour les emballages tels que les emballages de produits alimentaires, pharmaceutiques et cosmétologiques.

L'invention est illustrée par l'exemple de réalisation donné ci-après.

Exemple

On réalise un complexe laminé à partir d'un film (A) à cinq couches DCPCD, dans lequel :
- P représente une couche en polyamide PAMXD6 (vendu sous la dénomination commerciale NYREF 6001 par SOLVAY & Cie) d'une épaisseur de 15 μm;
- C représente une couche en terpolymère éthylène-acide acrylique-anhydride maléique (vendu sous la dénomination commerciale LOTADER 3410 par ORKEM) d'une épaisseur de 3,5 μm;
- D représente une couche à base d'un mélange contenant 60 % en poids d'un polyéthylène à basse densité de melt index mesuré selon la norme D1238 de 4,5 (produit commercialisé par NESTE OY) et 40 % en poids d'un ionomère (le produit ESCOR 5110 d'EXXON CHEMICAL) d'une épaisseur de 6 μm.

Pour fabriquer la structure multicouche du film (A), on dispose de trois extrudeuses alimentant un bloc d'alimentation particulier, lequel alimente lui-même une filière plate de 189 cm de largeur. Les extrudeuses alimentent les couches P, C et D du film (A). Le bloc de raccordement et la filière plate sont conditionnés thermiquement à 280° C. La vitesse linéaire du film (A) après coextrusion est égale à 66 m/min.

Le film (A), sortant de la filière plate à une température de 280° C, est ensuite déposé sur une feuille de papier blanc brillant et assemblé par passage entre une paire de cylindres de 30 cm de diamètre. Les deux cylindres étaient refroidis à l'eau à 20° C.

Après refroidissement, à température ambiante, on a évalué l'adhérence (résistance au délaminage) sur un dynamomètre FRANK type 650 suivant une méthode proche de la norme ASTM D 1876-72. Pendant ce test, le film (A) était déchiré avant le délaminage dudit film de son support, ce qui indique qu'on a obtenu une très bonne adhérence.

La mesure de la perméabilité à l'oxygène, suivant la norme ASTM D 1434, du complexe laminé donne une valeur égale à 19 $cm^3/m^2$.jr.atm et la perméabilité à la vapeur d'eau, mesurée suivant la norme ASTM E 96-E, est égale à 14 $g/m^2$.jr. Le complexe laminé obtenu suivant l'invention est donc caractérisé par une bonne imperméabilité aux gaz et à la vapeur d'eau.

## Revendications

1 - Complexe laminé constitué d'une feuille support revêtue d'un film (A) comprenant au moins une couche à base d'un polyamide (P) résultant de la polycondensation d'un acide $\alpha,\omega$-dicarboxylique aliphatique avec des xylylènes diamines.

2 - Complexe laminé suivant la revendication 1, caractérisé en ce que l'acide $\alpha,\omega$-dicarboxylique aliphatique est l'acide adipique.

3 - Complexe laminé suivant les revendications 1 et 2, caractérisé en ce que la feuille support est à base de matériau cellulosique.

4 - Complexe laminé suivant l'une quelconque des revendications 1 à 3, caractérisé en ce que le film (A) comprend au moins une couche à base de polyamide (P) et au moins une couche (C) à base d'une polyoléfine modifiée.

5 - Complexe laminé suivant la revendication 4, caractérisé en ce que la polyoléfine modifiée est une polyoléfine modifiée par greffage d'un monomère polaire.

6 - Complexe laminé suivant la revendication 5, caractérisé en ce que le monomère polaire est un acide carboxylique insaturé ou l'anhydride dérivé de cet acide.

7 - Complexe laminé suivant la revendication 4, caractérisé en ce que la polyoléfine modifiée est un terpolymère éthylène-acide acrylique-anhydride maléique.

8 - Complexe laminé suivant l'une quelconque des revendications 1 à 7, caractérisé en ce que le film (A) comprend au moins une couche à base de polyamide (P) et au moins une couche (D) à base d'un polymère thermoplastique dont la température de mise en oeuvre est compatible avec celle du polyamide (P).

9 - Complexe laminé suivant la revendication 8, caractérisé en ce que le polymère thermoplastique comprend du polyéthylène à basse densité.

10 - Complexe laminé suivant les revendications 4 et 8, caractérisé en ce que le film (A) comprend dans l'ordre :
- une couche (D) en contact avec la feuille support,
- une couche (C),
- une couche à base de polyamide (P).

11 - Complexe laminé suivant les revendications 4 et 8, caractérisé en ce que le film (A) comprend dans l'ordre :
- une couche (D) en contact avec la feuille support,
- une couche (C),
- une couche à base de polyamide (P),
- une couche (C).

12 - Complexe laminé suivant les revendications 4 et 8, caractérisé en ce que le film (A) comprend dans l'ordre :
- une couche (D) en contact avec la feuille support,
- une couche (C),
- une couche en polyamide (P),
- une couche (C),
- une couche (D).

13 - Complexe laminé suivant les revendications 4 et 8, caractérisé en ce que le film (A) comprend dans l'ordre :
- une couche à base de polyamide (P) en contact avec une feuille support,
- une couche (C),
- une couche (D).

14 - Complexe laminé suivant les revendications 4 et 8, caractérisé en ce que le film (A) comprend dans l'ordre :
- une couche (C) en contact avec la feuille support,
- une couche à base de polyamide (P),
- une couche (C),
- une couche (D).

15 - Complexe laminé suivant l'une quelconque des revendications 4 à 14, caractérisé en ce que le film (A) est réalisé par coextrusion.

16 - Procédé pour fabriquer des complexes laminés selon l'une quelconque des revendications 1 à 15, caractérisé en ce que la feuille support est à base de matériau cellulosique; le film (A) comprend au moins une couche à base de polyamide (P) résultant de la polycondensation de la m-xylylène diamine et d'acide adipique et au moins une couche à base de polyéthylène à basse densité; le film (A) est coextrudé entre environ 270 et environ 290° C; la feuille support et le film (A) sont assemblés par calandrage.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 288 972 (MITSUBISHI GAS CHEMICAL CO.) * Revendications 1,3,4 * | 1,2,4, 15 | B 32 B 27/34 B 32 B 23/08 B 32 B 31/30 |
| X | EP-A-0 254 531 (JAPAN STYRENE PAPER CORP.) * Revendications 1-4; page 2, lignes 26-34 * | 1,2 | |
| A | | 4-6 | |
| A | GB-A-2 040 223 (ASAHI KASEI KOGYO) * Revendications 1,9,10; page 1, lignes 22-55; page 3, ligne 37; page 4, lignes 55-60 * | 1-6,15 | |

DOMAINES TECHNIQUES
RECHERCHES (Int. Cl.5)

B 32 B

Le présent rapport a été établi pour toutes les revendications

| Lieu de la recherche | Date d'achèvement de la recherche | Examinateur |
|---|---|---|
| LA HAYE | 10-08-1990 | MCCONNELL C.H. |